# DEMANDE DE BREVET EUROPEEN

(11) **EP 1 922 941 A1**
(43) Date de publication de la demande: **21.05.2008**
(21) Numéro de dépôt: 07360053.8
(22) Date de dépôt: 18.10.2007
(51) Int. Cl.: A23N 15/02

(54) **Egrappoir avec un batteur à hélices continues**

(30) Priorité: 14.11.2006 FR 0609939
(71) Demandeur: VASLIN BUCHER (S.A.), 49290 Chalonnes sur Loire (FR)
(72) Inventeur: Dobrowolski, Eric, 49800 Trelaze (FR); Kervarec, Emmanuel, 49000 Angers (FR); Pajot, Hervé, 49000 Angers (FR)
(74) Mandataire: Nuss, Pierre

(57) **Abrégé**

La présente invention a pour objet un égrappoir pour le traitement de matières à égrapper, comprenant essentiellement une cage cylindrique perforée et un batteur ou arbre d'égrappage, monté avec faculté de rotation dans la cage et pourvu de moyens radiaux montés sur un arbre porteur et constituant au moins une formation hélicoïdale s'étendant le long dudit arbre, ladite cage et ledit arbre d'égrappage étant installés dans un caisson ou une enceinte analogue pourvu(e) d'un moyen d'alimentation en matières à égrapper et de moyens d'évacuation des deux composantes séparées par traitement.

Egrappoir caractérisé en ce que la ou chaque formation hélicoïdale (4) comporte une zone (5) de bord libre longitudinal formée par une bande continue (6) en un matériau souple et/ou flexible.

## Description

La présente invention concerne le traitement de matières récoltées en vue de les séparer en une composante noble et exploitable et des déchets.

L'invention concerne plus particulièrement un égrappoir pour le traitement de matières à égrapper, tel que par exemple des vendanges ou analogue.

L'opération d'égrappage permet de séparer les baies (par exemple de grains de raisin) des rafles, des feuilles, des morceaux de sarments, des branches et de tout autre corps étranger susceptible de se retrouver dans les matières récoltées (par exemple également des pierres, des mottes de terre, des nids d'oiseaux,...).

Cette opération est réalisée par une machine appelée égrappoir, qui est généralement constituée d'une trémie d'alimentation recevant la vendange ou analogue et d'une cage cylindrique horizontale perforée, à l'intérieur de laquelle est monté avec faculté de rotation un batteur ou arbre d'égrappage. Ce dernier projette la vendange ou la matière analogue contre la paroi de la cage perforée, tout en la faisant progresser dans cette dernière. Les baies séparées passent alors par les trous de la cage et les déchets sont déplacés par le mouvement de progression vers l'extrémité de la cage opposée à la trémie d'alimentation, pour être évacués.

La cage cylindrique tourne éventuellement également sur elle-même (à faible vitesse) pour éviter que les déchets ne s'accumulent et n'obstruent les perforations de ladite cage.

L'arbre d'égrappage ou batteur est généralement monté excentré par rapport à l'axe de symétrie longitudinal de la cage. Ainsi, en partie haute, la distance libre entre le batteur et la paroi de la cage permet à la vendange ou analogue de sortir de l'emprise dudit batteur et de retomber pour être à nouveau battue par ce dernier, ce tout au long du transfert de la matière à égrapper dans ladite cage.

Actuellement, les arbres d'égrappage ou batteurs sont généralement munis d'une pluralité d'éléments de battage et d'entraînement discrets sous forme de doigts cylindriques, disposés sur un arbre porteur longitudinal selon un ou plusieurs arrangement(s) en forme d'hélice (souvent deux ou trois hélices). A l'extrémité de chaque doigt rigide est fixée une palette (avec un angle qui peut être réglable) de manière à former avec le doigt correspondant un genre de spatule. Du fait de la rotation de l'arbre d'égrappage autour de son axe, ces spatules frappent les grappes de raisin ou matières à égrapper analogues pour séparer la composante noble des déchets.

Le pas de chaque arrangement ou formation en hélice formé par les doigts ou spatules, ainsi que l'orientation des palettes d'extrémité, déterminent la vitesse de progression de la vendange ou analogue dans la cage.

Toutefois, les égrappoirs existants précités présentent un certain nombre d'inconvénients et de limitations révélés par l'usage et l'exploitation desdits égrappoirs sur une durée conséquente.

Ainsi, la surface de frappe totale est relativement limitée et les doigts ou spatules réalisent une trituration importante de la vendange ou des matières à égrapper analogues, pouvant résulter en un risque d'éclatement augmenté des baies, en une fragmentation de certains déchets rendant leur séparation plus difficile ou des problèmes analogues.

En outre, du fait de leur relative rigidité, on constate une fréquence de casse des doigts relativement importante et des coincements des matières à égrapper ou des déchets entre l'extrémité des doigts et la paroi de la cage (blocage de la rotation de l'arbre).

Enfin, l'installation des doigts et le remplacement des doigts endommagés sont des opérations délicates et fastidieuses, résultant en des coûts de main d'oeuvre élevés.

La présente invention a notamment pour but de pallier les inconvénients précités et de surmonter les limitations exposées précédemment.

A cet effet, la présente invention a pour objet un égrappoir pour le traitement de matières à égrapper, comprenant essentiellement une cage cylindrique perforée et un batteur ou arbre d'égrappage, monté avec faculté de rotation dans la cage et pourvu de moyens radiaux montés sur un arbre porteur et constituant au moins une formation hélicoïdale s'étendant le long dudit arbre, ladite cage et ledit arbre d'égrappage étant installés dans un caisson ou une enceinte analogue pourvu(e) d'un moyen d'alimentation en matières à égrapper et de moyens d'évacuation des deux composantes séparées par traitement, égrappoir caractérisé en ce que la ou chaque formation hélicoïdale dudit batteur ou arbre d'égrappage comporte une zone de bord libre longitudinal formée par une bande continue en un matériau souple et/ou flexible.

L'invention a également pour objet un batteur pour un égrappoir du type précité et présentant les caractéristiques exposées dans la présente.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et partiellement en coupe d'un batteur ou arbre d'égrappage monté dans une cage ajourée d'un égrappoir ;
la figure 2 est une vue en élévation d'un égrappoir, vu du côté alimentation, comprenant un arbre d'égrappage et une cage tels que représentés sur la figure 1 (vu dans la direction D de cette dernière) ;

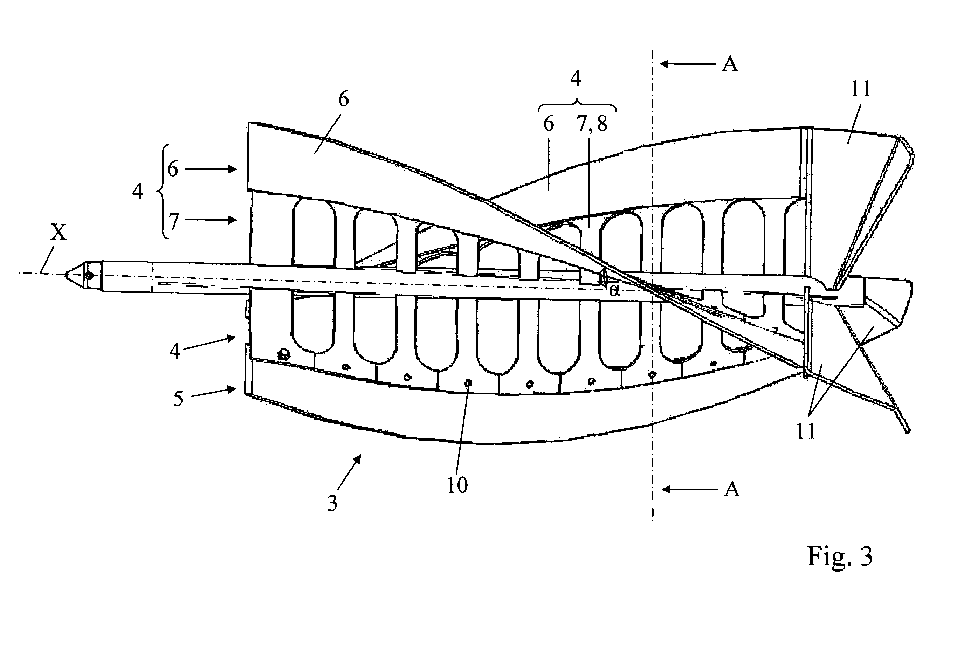

la figure 3 est une vue en élévation latérale d'un arbre d'égrappage tel que représenté sur les figures 1 et 2 ;

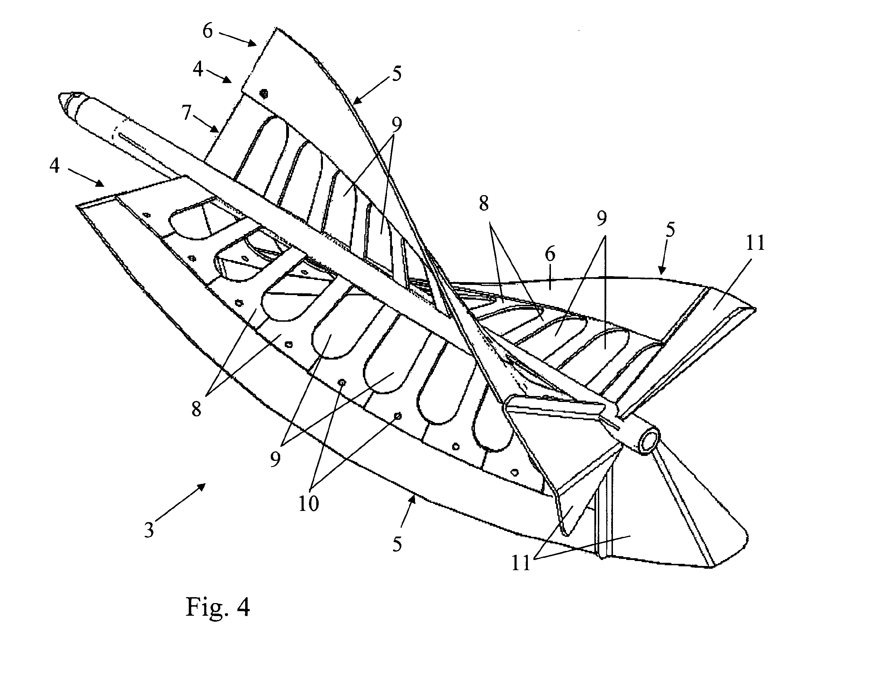

la figure 4 est une vue en perspective de l'arbre d'égrappage représenté sur la figure 3, et,

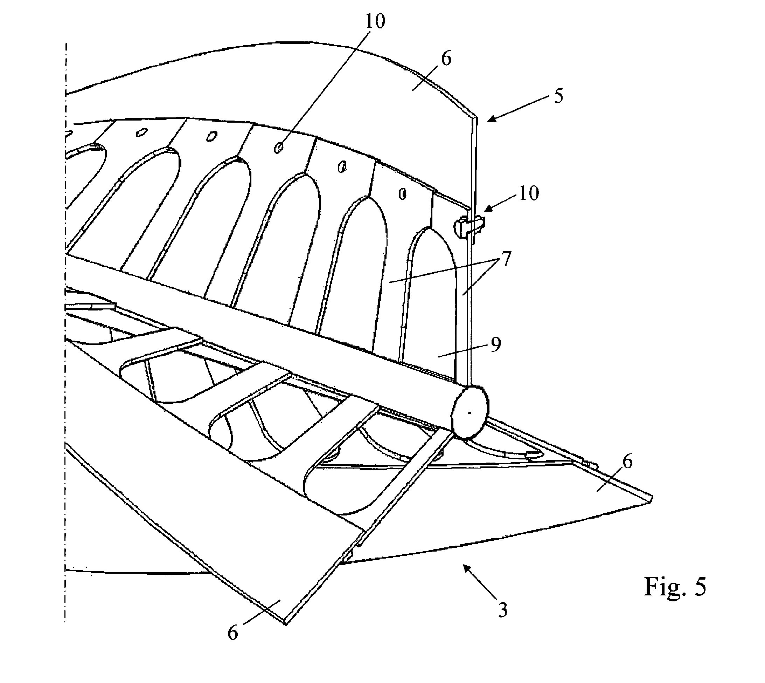

la figure 5 est une vue partielle en coupe selon A-A et en perspective de l'arbre d'égrappage représenté sur la figure 3.

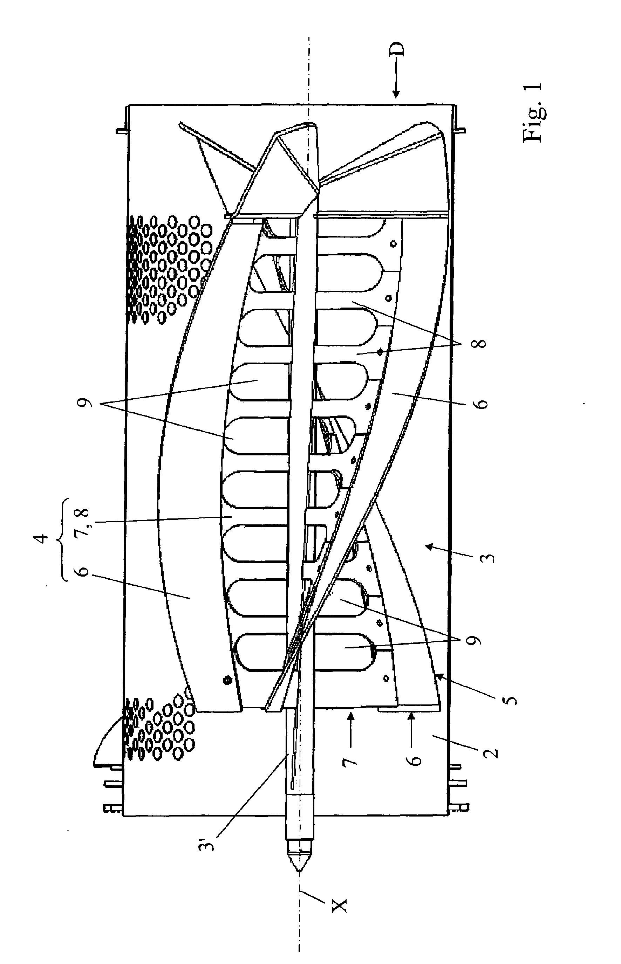

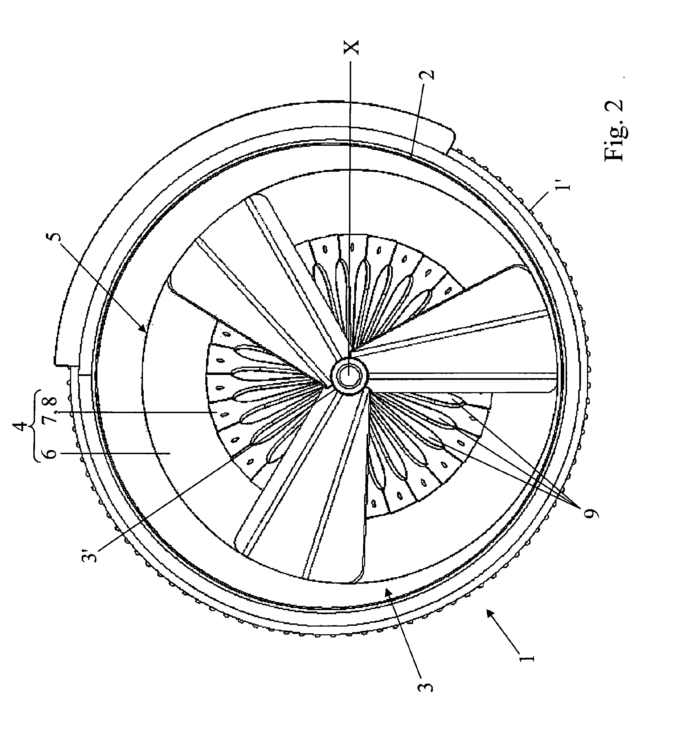

Les figures 1 et 2 des dessins annexés montrent, au moins partiellement, un égrappoir 1 pour le traitement de matières à égrapper, comprenant essentiellement une cage cylindrique perforée 2 et un batteur ou arbre d'égrappage 3, monté avec faculté de rotation dans la cage 2 et pourvu de moyens radiaux montés sur un arbre porteur 3' et constituant au moins une formation hélicoïdale 4 s'étendant le long dudit arbre, ladite cage 2 et ledit arbre d'égrappage 3 étant installés dans un caisson ou une enceinte analogue 1' pourvu(e) d'un moyen d'alimentation en matières à égrapper et de moyens d'évacuation des deux composantes séparées par traitement (moyens non représentés).

Conformément à l'invention, la ou chaque formation hélicoïdale 4 comporte une zone 5 de bord libre longitudinal formée par une bande continue 6 en un matériau souple et/ou flexible.

Conformément à un mode de réalisation préféré de l'invention, ressortant des figures annexées, la ou chaque formation hélicoïdale 4 comprend une partie support rigide 7, fixée avec une extension longitudinale sur l'arbre porteur 3' en s'enroulant autour de ce dernier et portant le long de son bord libre la bande 6 de matériau souple et/ou flexible, constituant l'organe de battage et la pièce d'usure de la formation considérée.

Selon une première variante de réalisation, représentée aux dessins annexés, la partie support 7 de la ou de chaque formation hélicoïdale 4 est constituée par une succession d'éléments support individuels 8, avantageusement en forme de spatules ou de palettes à structure plate ou plane, formant avec l'arbre porteur 3' une hélice transporteuse à vis sans fin.

Les spatules ou palettes peuvent être mutuellement jointives ou non et sont fixées rigidement sur l'arbre porteur 3 avec l'orientation et l'inclinaison souhaitées en fonction du profil d'hélice à obtenir. Leur faible épaisseur apparente dans la direction de développement de l'hélice augmente la section de passage libre dans la cage 2 et réduit la résistance à la progression des matières à égrapper ou des déchets.

Selon une seconde variante de réalisation, non représentée sur les dessins annexés, la partie support 7 de la ou de chaque formation hélicoïdale 4 est constituée par un élément continu plat ou à structure plane, tel qu'une bande de tôle, conformé pour réaliser avec l'arbre porteur 3' une hélice transporteuse à vis sans fin. Cette seconde variante correspond en fait à une jonction des spatules 8 de la première variante en une pièce unique.

En accord avec une caractéristique préférée de l'invention, la ou chaque formation hélicoïdale 4 présente des jours ou des découpes 9 au niveau de sa partie support 7, de manière à former une hélice à spires au moins partiellement évidées.

Les dimensions, la forme et le nombre des jours ou découpes 9 sont éventuellement adaptés aux matières à égrapper (taille courante des déchets, degré d'agglomération, ...), pour participer à la fonction de séparation, tout en évitant les bouchages. Il peut aussi être prévu des parties support 7 continues ou pleines, c'est-à-dire dépourvues de jours ou de découpes.

Comme le montrent les figures annexées, la bande 6 de matériau souple et/ou flexible est solidarisée rigidement avec la partie support 7, avantageusement de manière amovible, par exemple par pincement, par emboîtement ou par des ensembles vis-écrou 10.

Ainsi, la ou chaque bande 6 constitue un élément d'usure aisément interchangeable, sans nécessiter un quelconque réglage de son inclinaison.

Chaque bande 6 sera tenue latéralement sur une certaine largeur interne par la partie support 7, qui assurera également son orientation.

Le bord libre de la bande souple 6 peut être rectiligne (même largeur sur toute sa longueur) ou présenter un profil de découpe linéaire ou non (par exemple découpes en créneaux imitant les palettes de l'art antérieur).

Préférentiellement, l'angle d'inclinaison α de la ou de chaque formation hélicoïdale 4 par rapport à l'axe X de l'arbre porteur 3', vue de chant radialement par rapport audit arbre 3, est compris entre 10 ° et 25 °, préférentiellement d'environ 20 °.

Comme le montrent les figures annexées, l'arbre porteur 3 est avantageusement pourvu d'au moins deux, préférentiellement de trois, formations hélicoïdales 4 s'étendant de manière mutuellement parallèle le long dudit arbre porteur 3', ce dernier étant préférentiellement monté de manière excentrée vers le bas, dans la cage 2.

En accord avec une réalisation pratique de l'invention, la bande 6 souple et/ou flexible consiste avantageusement en un matériau choisi dans le groupe formé par le caoutchouc, naturel ou synthétique, le polyéthylène haute densité, le polyacétal et le polyuréthane.

La bande 6 pourra, par exemple, présenter une largeur comprise entre 60 et 120 mm et une épaisseur comprise entre 4 mm et 15 mm, ce en fonction du matériau constitutif et de la raideur ou souplesse souhaitée (par exemple 10 mm pour le caoutchouc).

La fixation préférée s'effectue par vis montées à intervalles réguliers le long du bord libre de l'hélice 4 concernée. Chaque bande 6 pourra éventuellement aussi intégrer une armature de renfort si nécessaire, éventuellement au niveau de sa partie ou de ses points de fixation.

Afin de dégager en permanence l'entrée de la cage 2 et de rabattre les matières à égrapper dans les passages hélicoïdaux entre les formations 4, l'arbre d'égrappage 3 comporte, au niveau de son extrémité proximale du moyen d'alimentation en matières à égrapper, une ou plusieurs pale(s) 11 de rabattage en forme de pelles, dont chacune est attenante à une formation hélicoïdale 4.

Grâce à l'invention, il est donc possible de fournir un égrappoir 1 avec un batteur 3 présentant par rapport aux égrappoirs connus décrits en introduction à la présente les avantages suivants :
- Gain économique à la fabrication (surtout lorsque la partie support 7 est d'un seul tenant);
- Plus grande souplesse de frappe et moins de trituration de la vendange : la partie en contact avec le raisin est plus souple et risque donc moins de détériorer les baies et les rafles ;
- Plus grande surface de frappe, ce qui augmente la capacité d'égrappage et l'efficacité ;
- Capacité à laisser passer les corps étrangers sans blocage, en évitant les coincements et l'endommagement du batteur ou de la cage ;
- La bande souple protège le reste du batteur : en cas de dégradation elle peut être changée aisément.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Egrappoir pour le traitement de matières à égrapper, comprenant essentiellement une cage cylindrique perforée et un batteur ou arbre d'égrappage, monté avec faculté de rotation dans la cage et pourvu de moyens radiaux montés sur un arbre porteur et constituant au moins une formation hélicoïdale s'étendant le long dudit arbre, ladite cage et ledit arbre d'égrappage étant installés dans un caisson ou une enceinte analogue pourvu(e) d'un moyen d'alimentation en matières à égrapper et de moyens d'évacuation des deux composantes séparées par traitement, égrappoir (1) **caractérisé en ce que** la ou chaque formation hélicoïdale (4) du batteur ou arbre d'égrappage (3) comporte une zone (5) de bord libre longitudinal formée par une bande continue (6) en un matériau souple et/ou flexible.

2. Egrappoir selon la revendication 1, **caractérisé en ce que** la ou chaque formation hélicoïdale (4) comprend une partie support rigide (7), fixée avec une extension longitudinale sur l'arbre porteur (3') en s'enroulant autour de ce dernier et portant le long de son bord libre la bande (6) de matériau souple et/ou flexible.

3. Egrappoir selon la revendication 2, **caractérisé en ce que** la partie support (7) de la ou de chaque formation hélicoïdale (4) est constituée par une succession d'éléments support individuels (8), avantageusement en forme de spatules ou de palettes à structure plate ou plane, formant avec l'arbre porteur (3') une hélice transporteuse à vis sans fin.

4. Egrappoir selon la revendication 2, **caractérisé en ce que** la partie support (7) de la ou de chaque formation hélicoïdale (4) est constituée par un élément continu plat ou à structure plane, tel qu'une bande de tôle, conformé pour réaliser avec l'arbre porteur (3') une hélice transporteuse à vis sans fin.

5. Egrappoir selon l'une quelconque des revendications 2 à 4, **caractérisé en ce que** la ou chaque formation hélicoïdale (4) présente des jours ou des découpes (9) au niveau de sa partie support (7), de manière à former une hélice à spires au moins partiellement évidées.

6. Egrappoir selon l'une quelconque des revendications 2 à 5, **caractérisé en ce que** la bande (6) de matériau souple et/ou flexible est solidarisée rigidement avec la partie support (7), avantageusement de manière amovible, par exemple par pincement, par emboîtement ou par des ensembles vis-écrou (10).

7. Egrappoir selon l'une quelconque des revendications 1 à 6, **caractérisé en ce que** l'angle d'inclinaison (α) de la ou de chaque formation hélicoïdale (4) par rapport à l'axe (X) de l'arbre porteur (3'), vue de chant radialement par rapport audit arbre (3'), est compris entre 10° et 25°, préférentiellement d'environ 20 °.

8. Egrappoir selon l'une quelconque des revendications 1 à 7, **caractérisé en ce que** l'arbre porteur (3') est pourvu d'au moins deux, préférentiellement de trois, formations hélicoïdales (4) s'étendant de manière mutuellement parallèle le long dudit arbre porteur (3'), ce dernier étant préférentiellement monté de manière excentrée vers le bas, dans la cage (2).

9. Egrappoir selon l'une quelconque des revendications 1 à 8, **caractérisé en ce que** la bande souple et/ou flexible (6) consiste en un matériau choisi dans le groupe formé par le caoutchouc, naturel ou synthétique, le polyéthylène haute densité, le polyacétal et le polyuréthane.

10. Egrappoir selon l'une quelconque des revendications 1 à 9, **caractérisé en ce que** l'arbre d'égrappage (3) comporte, au niveau de son extrémité proximale du moyen d'alimentation en matières à égrapper, une ou plusieurs pale(s) (11) de rabattage, dont chacune est attenante à une formation hélicoïdale (4).

11. Batteur pour égrappoir du type comprenant essentiellement une cage cylindrique perforée et un batteur ou arbre d'égrappage, monté avec faculté de rotation dans la cage et pourvu de moyens radiaux montés sur un arbre porteur et constituant au moins une formation hélicoïdale s'étendant le long dudit arbre, ladite cage et ledit arbre d'égrappage étant installés dans un caisson ou une enceinte analogue pourvu(e) d'un moyen d'alimentation en matières à égrapper et de moyens d'évacuation des deux composantes séparées par traitement, batteur **caractérisé en ce que** la ou chaque formation hélicoïdale (4) comporte une zone (5) de bord libre longitudinal formée par une bande continue (6) en un matériau souple et/ou flexible.
